# EUROPEAN PATENT SPECIFICATION

(11) **EP 1 428 809 B1**
(45) Date of publication and mention of the grant of the patent: **07.05.2008**
(21) Application number: 03257738.9
(22) Date of filing: 09.12.2003
(51) Int. Cl.: C04B 38/00, C04B 35/195

(54) **Process for production of formed honeycomb body**
Verfahren zur Herstellung eines Wabenkörpers
Procédé de fabrication d'un corps en nid d'abeilles

(30) Priority: 12.12.2002 JP 2002360252
(43) Date of publication of application: 16.06.2004
(73) Proprietor: NGK INSULATORS, LTD., Nagoya-City, Aichi Pref. 467-8530 (JP)
(72) Inventor: Miyakawa, Takashi, Nagoya City Aichi-ken 467-8530 (JP); Inoue, Satoru, Nagoya City Aichi-ken 467-8530 (JP)
(74) Representative: Paget, Hugh Charles Edward

(56) References cited:
- EP-A- 0 560 290
- US-A- 4 851 376
- PATENT ABSTRACTS OF JAPAN vol. 2002, no. 09, 4 September 2002 (2002-09-04) & JP 2002 136817 A (NGK INSULATORS LTD), 14 May 2002 (2002-05-14)

## Description

### Background of the Invention and Related art Statement

The present invention relates to a process for producing a formed honeycomb body which is an intermediate for production of a honeycomb structure suitably used, for example, as a diesel particulate filter or as a carrier for catalyst for purification of automobile exhaust gas. Particularly, the present invention relates to a process for producing a formed honeycomb body, which can reuse a rejected product of undried formed material as a raw material for forming a honeycomb body structure.

In recent years, ceramic-made honeycomb structures superior in heat resistance and corrosion resistance have been used in various application fields such as diesel particulate filter (DPF) for capturing particulates emitted from a diesel engine, catalyst carrier for loading a catalyst for purification of automobile exhaust gas, and the like.

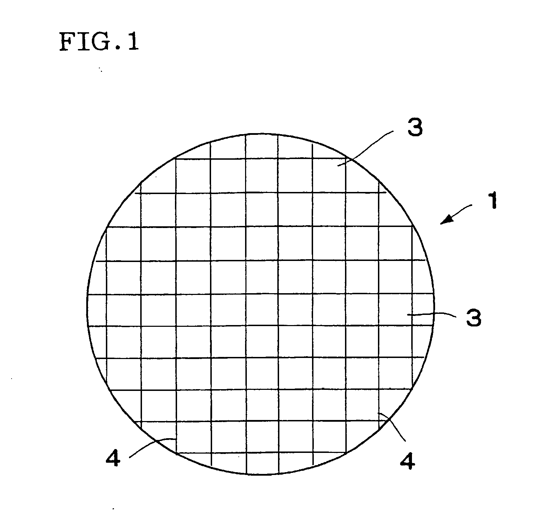

Such a honeycomb structure, like a honeycomb structure 1 shown in Fig. 1, is made of a porous material having a large number of pores and has a honeycomb shape having a plurality of cells 3 (through which a fluid passes) divided by partition walls 4. It is produced ordinarily by mixing a raw material for forming a honeycomb body structure containing at least a ceramic raw material powder, a binder and water, to obtain a compounded mixture for forming a green body, then kneading and extruding the compounded mixture for forming a green body into a honeycomb shape using a continuous extruder, to obtain a formed honeycomb body, and drying and firing the formed honeycomb body.

In production of the above honeycomb structure, however, there appear, during forming or drying, defects such as cell deformation (bending of cells in direction of cell formation as well as in direction of cell end surface), longitudinal cracking (surface cracking) and the like, which generates rejected products of undried formed material and dried formed material in unignorable amounts. Hence, it has been tried to reuse these rejected products as a raw material for forming a honeycomb body structure in order to increase the yield against the raw material used and prevent a reduction in product yield.

For example, as the method for reusing rejected products of dried formed material as a raw material for forming a honeycomb body structure, there was proposed a method of using, as a starting raw material, a regenerated raw material obtained by regeneration of a unfired dried material consisting of a compound of predetermined raw materials for cordierite, and forming the regenerated raw material to obtain an intended formed material (See JP-A-3-72032).

US-A-4851376 describes a similar process in which a reclaimed cordierite composition in the form of a dried, unfired, rejected scrap is mixed with a fresh cordierite composition. The scrap may be crushed into pieces having an average diameter of about 50 mm.

However, there have been the problems mentioned below when a green body such as undried formed material was reused for a raw material for forming a honeycomb body structure, unlike the case the above-mentioned dried formed material was used. That is, since a green body contains water of about 20% by mass and has a high viscosity; therefore, when the green body is added into an ordinary raw material for forming a honeycomb body structure used in the form of dried powder, the green body becomes lumps of about fist size and only a compounded mixture for forming a green body is obtained wherein the raw material for forming a honeycomb body structure and the green body are mixed in a non-uniform state.

When such a compounded mixture for forming a green body is used for the forming step per se, the continuous extruder used undergoes an excessive load and its operation is unstable; as a result, there have been problems in that the formed body produced has defects such as voids, bending, cell deformation and the like.

Hence, in the past, it was necessary to beforehand knead a compounded mixture for forming a green body using a kneader and then feed the kneaded compounded mixture for forming a green body into a batch type extruder, and such an operation was troublesome. Because of such problems, no effective method for enabling reuse of a green body per se as a raw material for forming a honeycomb body structure has been found yet, and rejected products of undried formed material are still being disposed as a waste.

The present invention has been made in view of the above-mentioned problems of the prior art and aims at providing a process for producing a formed honeycomb body, which can reuse a rejected product of undried formed material as a raw material for forming a honeycomb body structure in an efficient manner.

### Summary of the Invention

The present inventors made an intensive study in order to solve the above-mentioned problems. As a result, the present inventors have found that the above-mentioned objective can be achieved by adding, to an ordinary raw material for forming a honeycomb body structure used in the form of dried powder, a material obtained by crushing green body or bodies having substantially the same composition as a compounded mixture for forming a green body to be obtained, into a predetermined maximum particle diameter or smaller, followed by mixing the resultant with a mixture of virgin raw materials for forming a honeycomb structure by a mixer to obtain a compounded mixture for forming a green body. The present invention has been completed based on the above finding.

That is, the present invention provides the following process for production of a formed honeycomb body and the following honeycomb structure in an efficient manner. Hereinafter, the expression "a crushed green body" includes a material obtained by crushing rejected green body or bodies.

There is provided according to the invention a process for producing a formed honeycomb body as set out in claim 1.

It is preferable to use a ceramic raw material powder containing a regenerated raw material powder obtained by drying a green body having substantially the same composition as the compounded mixture for forming a green body and crushing the dried green body.

It is preferable to first mix raw materials for forming a honeycomb body structure by a mixer, then add thereto the crushed green body in the form of powdery material, and mix thoroughly the resultant by a mixer to obtain the compounded mixture for forming a green body. A single-screw or multi-screw kneading extruder can be used in the present process as a continuous extruder.

By the present invention, there may be obtained a honeycomb structure being made of a sintered cordierite material having a large number of pores and a specific total volume shared by distributed pores of 0.140 cc/g or less; and containing at least 30 parts by mass of said sintered cordierite material being originated from a crushed green body in the form of powdery material.

The honeycomb structure may preferably have a thermal expansion coefficient of 0.2 to 0.35 x 10⁻⁵/°C as measured according to the method described in JIS R 1618.

### Brief Description of the Drawings

Fig. 1 is a schematic drawing showing the structure of an ordinary honeycomb structure.
Fig. 2 is a graph showing the ratios of rejected products generated and yields in production of the formed honeycomb bodies of Example and Comparative Example.
Fig. 3 is a graph showing the specific total volume shared by distributed pores (densities) of the honeycomb structures of Example and Comparative Example.
Fig. 4 is a graph showing the thermal expansion coefficients of the honeycomb structures of Example and Comparative Example.
Fig. 5 is a graph showing the heat resistance temperatures of the honeycomb structures of Examples and Comparative Example.

The numeral 1 refers to a honeycomb structure; the numeral 3 refers to a cell; and the numeral 4 refers to a partition wall.

### Detailed Description of the Invention

The mode for carrying out the process for producing a formed honeycomb body according to the present invention is specifically described below.

The present invention lies in a process as set out in claim 1 for producing a formed honeycomb body, which comprises mixing, by a mixer, a raw material for forming a honeycomb body structure containing at least a ceramic raw material powder, a binder and water, to obtain a compounded mixture for forming a green body, and kneading and extruding the compounded mixture for forming a green body into a honeycomb shape by a continuous extruder, to obtain a formed honeycomb body, wherein there is added in a predetermined amount, to a raw material for forming a honeycomb body structure, a powdery material obtained by crushing, into the maximum particle diameter of 50 mm or smaller, a crushed green body having substantially the same composition as the compounded mixture for forming a green body, and the resulting mixture is mixed thoroughly by a mixer to obtain a compounded mixture for forming a green body.

### ① First step (production of compounded mixture for forming a green body)

In the production process of the present invention, first, a raw material for forming a honeycomb body structure containing at least a ceramic raw material powder, a binder and water is mixed by a mixer to obtain a compounded mixture for forming a green body.

The ceramic raw material powder is a substance which can become aggregate particles [a main component of honeycomb structure (a sintered material)], and includes a ceramic powder which becomes aggregate particles per se and a powdery substance like a raw material for cordierite described later, which, when fired, turns to a ceramic and becomes aggregate particles. As the ceramic raw material powder in the present invention, there can be used, for example, a conventional known ceramic such as alumina, mullite, silicon nitride, silicon carbide or the like; however, there can be especially suitably used a raw material for cordierite [a material obtained by mixing talc, kaolin, alumina, etc. so as to give, after firing, a theoretical composition of cordierite, i.e. 2MgO·2Al₂O₃·5SiO₂], because it has a small thermal expansion coefficient and a honeycomb structure obtained by firing thereof can be suitably used as a diesel particulate filter or a carrier for catalyst for purification of automobile exhaust gas, both exposed to high temperatures.

As the ceramic raw material powder, a virgin raw material powder can be used, of course. However, it may contain a regenerated raw material powder obtained by drying and grinding a green body having substantially the same composition as a compounded mixture for forming a green body to be obtained. As the regenerated raw material powder, there may be used one obtained by drying and grinding a separately produced green body having substantially the same composition as a compounded mixture for forming a green body to be obtained; however, there can be suitably used one obtained by grinding a rejected product of dried formed material by a granulator (e.g. a gear crusher) or further by a pulverizer for making particle diameters even smaller. By using such a regenerated raw material, it is possible to reuse a rejected product of dried formed material and thereby enhance the yield relative to raw materials used and the yield of product.

When the ceramic raw material powder contains, as mentioned above, a virgin raw material powder and a regenerated raw material powder, there is no particular restriction as to the mass ratio of the virgin raw material powder and regenerated raw material powder; however, the mass ratio therebetween is preferably about 60:40 to 99:1 in order to prevent an increase in thermal expansion coefficient and generation of cracks in firing.

A binder is an additive for securing the shape retainability of formed material before firing. As the binder, there is generally used an organic high-molecular compound such as hydroxypropyl methyl cellulose, methyl cellulose, hydroxyethyl cellulose, carboxy methyl cellulose, polyvinyl alcohol or the like.

The amount of the binder added varies depending upon the kind, etc. of the binder, but it is generally about 2 to 10 parts by mass, preferably 3 to 7 parts by mass relative to 100 parts by mass of the ceramic raw material powder when there is used the above-mentioned organic high-molecular compound.

Water is added as a dispersing medium for converting the ceramic raw material powder into a compounded mixture for forming a green body having an appropriate viscosity. It is added in an amount of generally about 10 to 40 parts by mass, preferably 25 to 35 parts by mass relative to 100 parts by mass of the ceramic raw material powder.

The "raw material for forming a honeycomb body structure" referred to in the production process of the present invention contains at least a ceramic raw material powder, a binder and water. It may contain, as necessary, additives such as pore forming agent, dispersant and the like.

A pore forming agent is an additive for forming pores by disappearance in firing of formed material to produce a porous honeycomb structure of high porosity. As the pore forming agent, there can be suitably used, for example, an organic substance such as graphite, wheat flour, starch, phenolic resin, poly(methyl methacrylate), polyethylene, poly(ethylene terephthalate), micro-capsule made of foamed plastic (e.g. acrylic resin-based micro-capsule) or the like. A dispersant is an additive for promoting the dispersion of ceramic raw material powder in water. As the dispersant, there can be suitably used, for example, ethylene glycol, dextrin, fatty acid soap or polyalcohol.

The raw material for forming a honeycomb body structure is mixed by a mixer and made into a compounded mixture for forming a green body. As to the "mixer" referred to herein, there is no particular restriction as long as it can mix the raw material for forming a honeycomb body structure. There can be suitably used, for example, a mixer provided with a hoe rotating at a low speed and a chopper having a cross shaped blade rotating at a high speed. With such a mixer, the raw material for forming a honeycomb body structure fed is stirred by the hoe rotating at a low speed and is made fine by the chopper rotating at a high speed; as a result, a compounded mixture for forming a green body having appropriate particle diameters can be obtained very easily.

In the production process of the present invention, it is preferred to add, to the raw material for forming a honeycomb body structure, a crushed green body in an amount of 30 parts by mass or less in the form of powder having a predetermined particle size relative to 100 parts by mass of the ceramic raw material powder.

The "crushed green body" referred to in the production process of the present invention is a substance obtained by crushing a green body which has substantially the same composition as the compounded mixture for forming a green body obtained by mixing the raw material for forming a honeycomb body structure by a mixer and which is obtained by kneading the compounded mixture for forming a green body, into the maximum particle diameter of 50 mm or smaller, preferably 10 mm or smaller. As the crushed green body, there may be used a substance obtained by kneading a fresh compounded mixture for forming a green body and crushing the kneaded material; however, there can be suitably used a substance obtained by crushing a rejected product of undried formed material into the maximum particle diameter of 50 mm or smaller, preferably 10 mm or smaller using an appropriate crusher. Plural green bodies may be crushed for this purpose.

By using such a crushed green body in the form of powder, it is possible to reuse the rejected product of undried formed material and thereby enhance the yield relative to the raw material totally used and the yield of product. Here, note the expression "substantially the same composition" in the present specification means that the amounts of the materials used for forming the crushed green body are the same amounts for a fresh compounded mixture for forming a green body to be used for forming a green honeycomb body at the time when the fresh compounded mixture used for forming the crushed green body was prepared.

As the crusher, there can be suitably used a crusher comprising a cylindrical screen made of a perforated plate having holes of given diameter and multi-layered, cross shaped single-edged knives capable of rotating at a high speed, provided in the cylindrical screen. With such a crusher, a fed green body is gradually crushed by rotating single-edged knives, and only the portion of crushed green body having sizes capable of passing through the holes of the screen is discharged out of the screen by a centrifugal force; thereby, only the portion of crushed green body having a desired maximum particle diameter can be obtained very easily.

Incidentally, the maximum particle diameter of the crushed green body is specified at 50 mm or smaller in order to prevent, in adding a green body to an ordinary raw material for forming a honeycomb body structure in the form of dried powder, change of the green body into lumps of about fist size and, in the formed material obtained, generation of defects such as voids, bending, cell deformation and the like. An acceleration in such prevention effect becomes larger when the maximum particle diameter of the crushed green body in the powdery form is made 10 mm or smaller.

As to the amount of the crushed green body added, there is no upper limit from the standpoint of prevention of generation of defects such as voids, bending, cell deformation and the like in the formed material obtained. The amount may be, for example, about 100 parts by mass relative to 100 parts by mass of the ceramic raw material powder. However, the amount as set out in claim 1 is 30 parts by mass or less relative to 100 parts by mass of the ceramic raw material powder from the standpoint of prevention of generation of property deterioration, for example, reduction in the heat resistance temperature of a honeycomb structure obtained by drying and firing of a formed honeycomb body produced. The amount is more preferably 10 parts by mass or more from the standpoint of reuse of a rejected product of undried formed material.

There is no particular restriction as to the method for adding the crushed green body. However, it is preferred to mix a raw material for forming a honeycomb body structure by a mixer, then add thereto a crushed green body, and mixing the resultant by a mixer to obtain a compounded mixture for forming a green body. It is possible to add a crushed green body directly into a ceramic raw material powder in the form of dried powder, but the crushed green body tends to become lumps. Therefore, it is preferred to first mix a raw material for forming a honeycomb body structure containing a ceramic raw material powder, a binder and water, by a mixer to obtain a wet powder, add thereto a crushed green body, and mixing the resultant by a mixer to obtain a compounded mixture for forming a green body. When this method is adopted, the mixing time after addition of the crushed green body is preferred to be 2 to 5 minutes. A mixing time of more than 5 minutes is not preferred because the compounded mixture for forming a green body obtained becomes to have low fluidity.

As to the compounded mixture for forming a green body produced as above, it is unnecessary to knead the compounded mixture by a kneader and feed the kneaded compounded mixture into a batch type extruder, as done conventionally. The compounded mixture for forming a green body can be fed per se into a continuous extruder. Therefore, the operation is simple and the production equipment used can be simple as well.

### ② Second step (kneading and forming)

Next, the compounded mixture for forming a green body produced as above is kneaded and extruded into a honeycomb shape by a continuous extruder to obtain a formed honeycomb body.

The "honeycomb shape" referred to in the production process of the present invention means, as described previously, a shape having a plurality of cells (through which a fluid passes) divided by partition walls (see Fig. 1). As to the whole shape of the formed honeycomb body, there is no particular restriction as long as the formed honeycomb body has the above shape. As the whole shape, there can be mentioned, for example, a cylinder, a quadrangular prism, and a triangular prism. There is no particular restriction, either, as to the cell shape (the shape of the cell section normal to the direction of cell formation) of the formed honeycomb body. As the cell shape, there can be mentioned, for example, a tetragonal cell, a hexagonal cell and a triangular cell.

In the production process of the present invention, it is preferred to use a continuous extruder which can conduct kneading and forming simultaneously. For example, a single-screw or multi-screw kneading extruder is preferably used. In particular, a twin-screw kneading extruder or the like can be used suitably. By providing, at the front of such a continuous extruder, a die having a required cell shape, partition wall thickness and cell density, there can be obtained an intended formed honeycomb body.

The formed honeycomb body obtained by the above-mentioned production process of the present invention is dried by a conventional known drying method such as hot air drying, microwave drying, dielectric drying, reduced pressure drying, vacuum drying, freeze-drying or the like and fired in a batch type kiln or a continuous kiln such as tunnel kiln or the like, whereby can be obtained a honeycomb structure.

Incidentally, the production process of the present invention has, in addition to the above-mentioned merits, a merit that the honeycomb structure obtained finally can have a high density. That is, by drying and firing the formed honeycomb body obtained by the production process of the present invention, there can be obtained a honeycomb structure having such a high density unachievable with conventional production processes.

Specifically explaining, in the case of a honeycomb structure made of a sintered cordierite material, conventional processes could produce only a honeycomb structure having a specific total volume shared by distributed pores (which is a yardstick of density) of about 0.150 cc/g, while the present production process can produce a honeycomb structure having a specific total volume shared by distributed pores of 0.140 cc/g or less and 0.135 cc/g on an average. A honeycomb structure having such a high density is preferred for the excellent erosion resistance when used as a diesel particulate filter or as a carrier for catalyst for purification of automobile exhaust gas.

Incidentally, the "specific total volume shared by distributed pores (cc/g)" referred to in the present specification is a yardstick for the evaluation of a density using mercury porosity, and can be measured as follows. First, part of the honeycomb structure to be evaluated is cut out as a sample; mercury is forced into the sample; the total volume (cc) of the mercury forced into the pores of the sample is measured; and the volume is divided by the mass (g) of the sample to calculate the specific total volume shared by distributed pores of the honeycomb structure.

The production process of the present invention further has a merit that the honeycomb structure obtained finally can have a high density without changing the thermal expansion coefficient. That is, the production process of the present invention can produce a honeycomb structure of high density which retains cordierite properties of small thermal expansion coefficient and superior thermal shock resistance.

Specifically explaining, in the case of a honeycomb structure made of a sintered cordierite material, there can be obtained a honeycomb structure which has a specific total volume shared by distributed pores of 0.140 cc/g or less and 0.135 cc/g on an average while maintaining a thermal expansion coefficient of 0.2 to 0.35 x 10⁻⁵/°C (this is about the same level as obtained according to conventional production processes).

Incidentally, the "thermal expansion coefficient /°C" referred to in the present specification means a so-called linear thermal expansion coefficient and is measured according to the method described in JIS R 1618.

The production process of the present invention further can prevent cell deformation effectively, as mentioned previously. This action is especially striking when there is produced a formed honeycomb body having a very thin partition wall. That is, in conventional production processes, it has been almost impossible to produce a formed honeycomb body having a small partition wall thickness of 60 µm or less, with little cell deformation. However, according to the production process of the present invention, it is possible to produce a formed honeycomb body having a small partition wall thickness of 60 µm or less, with little cell deformation.

Incidentally, the cell deformation of formed honeycomb body can be examined numerically using an image processing technique.

### [Examples]

The present invention is described in more detail below by way of Examples. However, the present invention is in no way restricted to these Examples.

In the following Examples and Comparative Examples, those mentioned below were used for a ceramic raw material powder, a binder, a mixer and a continuous extruder.

As the ceramic raw material powder, there was used one obtained by mixing, at a 60:40 mass ratio, a raw material for cordierite (a new raw material powder) and a regenerated raw material powder (a powder obtained by grinding a rejected product of dried formed material having substantially the same composition as the raw material powder, into an average particle diameter of about 100 µm or smaller). As the binder, methyl cellulose was used.

As the crushed green body, there was used one obtained by crushing a rejected product of undried formed material having substantially the same composition as the compounded mixture for forming a green body used, into the maximum particle diameter of 10 mm or smaller, using a crusher comprising a cylindrical screen made of a perforated plate having holes of given diameter and multi-layered, cross shaped single-edged knives capable of rotating at a high speed, provided in the cylindrical screen.

As the mixer, there was used a mixer having a hoe rotating at a low speed and a chopper provided with a cross shaped blade rotating at a high speed. As the continuous extruder, a twin-screw kneading extruder was used.

### [Evaluation of compounded mixture for forming a green body by particle size distribution]

### (Example 1)

First, 100 parts by mass of a ceramic raw material powder and 7 parts by mass of a binder were mixed by a mixer for 3 minutes. Thereto was added 30 parts by mass of water, followed by mixing for 3 minutes, to produce a raw material for forming a honeycomb body structure. To this raw material for forming a honeycomb body structure was added 10 parts by mass of a crushed green body, followed by mixing for 4 minutes to obtain a compounded mixture for forming a green body. The particle size distribution of this compounded mixture for forming a green body is shown in Table 1. The particle size distribution was determined by passing the compounded mixture for forming a green body through sieves having an opening of 1 mm, 2 mm, 5 mm or 10 mm in this order, then measuring the masses of the compounded mixture for forming a green body portions obtained, and calculating the mass % of each portion.

### (Comparative Example 1)

First, 100 parts by mass of a ceramic raw material powder and 7 parts by mass of a binder were mixed by a mixer for 3 minutes. Thereto was added 30 parts by mass of water, followed by mixing for 3 minutes, to obtain a compounded mixture for forming a green body. The particle size distribution of this compounded mixture for forming a green body is shown in Table 1.

### (Comparative Example 2)

First, 100 parts by mass of a ceramic raw material powder and 7 parts by mass of a binder were mixed by a mixer for 3 minutes. Thereto was added 30 parts by mass of water, followed by mixing for 3 minutes, to produce a raw material for forming a honeycomb body structure. To this raw material for forming a honeycomb body structure was added 10 parts by mass of a rejected product of undried formed material, followed by mixing for 4 minutes to obtain a compounded mixture for forming a green body. The particle size distribution of this compounded mixture for forming a green body is shown in Table 1.

**Table 1**

| | Particle size distribution (mass %) | | | | Yield (%) |
|---|---|---|---|---|---|
| | Less than 2 mm | 2 mm to less than 5 mm | 5 mm to less than 10 mm | 10 mm or more | |
| Example 1 | 86.7 | 12.7 | 0.6 | 0 | 99.6 |
| Comparative Example 1 | 89.4 | 10.2 | 0.4 | 0 | 92.1 |
| Comparative Example 2 | 89.2 | 5.9 | 2.7 | 3.2 | - |

As is clear from Table 1, the compounded mixture for forming a green body containing a crushed green body, of Example 1 showed about the same particle size distribution as the compounded mixture for forming a green body using a dried powder alone and containing no crushed green body, of Comparative Example 1, and contained no particle of 10 mm or more in diameter. That is, the green body added did not become lumps of about fist size, and generation of defects such as voids, bending, cell deformation and the like in the formed material produced was considered to be preventable.
As a result, with the compounded mixture for forming a green body of Example 1, reuse of a green body, for example, a rejected product of undried formed material as a raw material for forming a honeycomb body structure was considered to be possible.

Meanwhile, with the compounded mixture for forming a green body containing a rejected product of undried formed material per se (not crushed), of Comparative Example 2, particles of 10 mm or more in diameter were observed in an amount of about 3.2% and the green body used became lumps of about fist size. That is, with the compounded mixture for forming a green body of Comparative Example 2, generation of defects such as voids, bending, cell deformation and the like in the formed material produced could not be prevented, and reuse of a green body, for example, a rejected product of undried formed material as a raw material for forming a honeycomb body structure was considered to be difficult.

### [Evaluation of dried formed materials by yield]

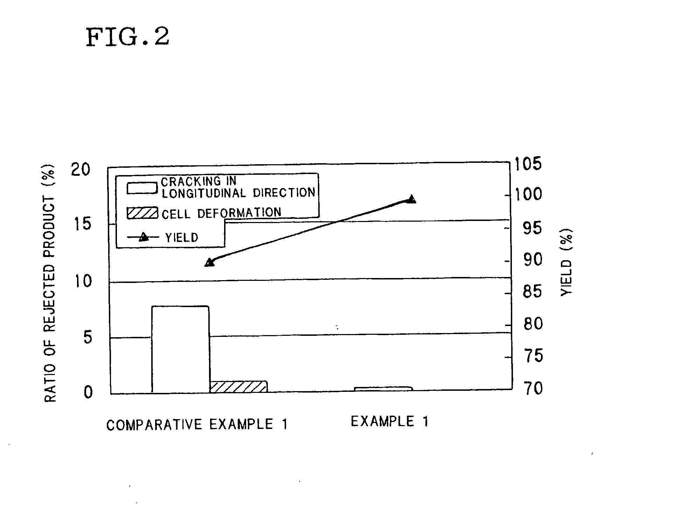

Each of the compounded mixture for forming a green body of Example 1 and Comparative Example 1 was passed through a continuous extruder to produce each 2,000 cylindrical formed honeycomb body having a circular bottom of 110 mm in diameter, a length of 80 mm, a square cell shape of 0.8 mm x 0.8 mm, a partition wall thickness of 50 µm, a cell density of 900/in.² and a total cell number of 13,000. Each formed honeycomb body was dried by dielectric drying and hot air drying to obtain a dried formed material. This material is described as dried formed material of Example 1 or Comparative Example 1. For the dried formed materials, there were examined the ratio of generated defect such as cell deformation (waviness of cells in the cell formation direction or the direction of cell end surface) or cracking formed in the longitudinal direction (surface cracking) and the yield of accepted product, and they are shown in Fig. 2. Incidentally, the ratio of generated defect and the yield were each expressed as a ratio of rejected products or accepted products to total production (2,000).

In the dried formed materials of Example 1, the yield was 99.6% and there was substantially no cell deformation or longitudinal cracking. That is, as compared with the yield (92.1%) of the dried formed materials of Comparative Example 1 using a dried powder alone and containing no crushed green body, the yield of Example 1 increased greatly. From these results, by using the compounded mixture for forming a green body of Example 1, it became possible to reuse a green body such as rejected product of undried formed material as a raw material for forming a honeycomb body structure, and further there were obtained merits of prevention of defects such as cell deformation and longitudinal cracking and a substantial increase in yield.

### [Evaluation of fired products by density and thermal expansion coefficient]

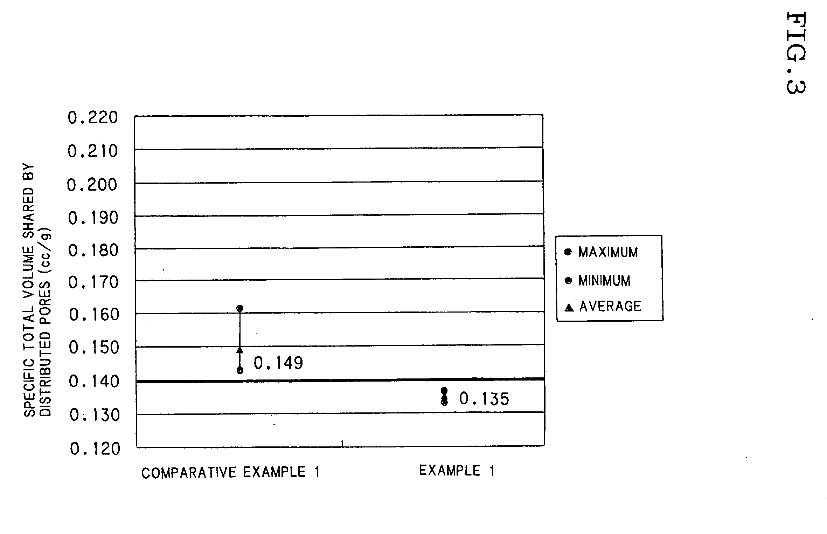

Of the dried formed materials of Example 1 and Comparative Example 1 produced as above, accepted products were fired in a tunnel kiln to produce honeycomb structures (these honeycomb structures are described as honeycomb structures of Example 1 and Comparative Example 1). Part of each honeycomb structure was cut out as a sample. Mercury was forced into the sample; the total volume (cc) of the mercury forced into the pores of the sample was measured; and the total volume of mercury was divided by the mass (g) of the sample to calculate the total volume of pores. The results are shown in Fig. 3.

As shown in Fig. 3, the specific total volume shared by distributed pores of the honeycomb structures of Example 1 were in a range of 0.133 to 0.136 cc/g with the average being 0.135 cc/g. Meanwhile, the specific total volume shared by distributed pores of the honeycomb structures of Comparative Example 1 were in a range of 0.143 to 0.161 cc/g with the average being 0.149 cc/g. It can be said from these results that by using the compounded mixture for forming a green body of Example 1, there could be obtained a honeycomb structure having a high density unobtainable with conventional processes or with the compounded mixture for forming a green body of Comparative Example 1.

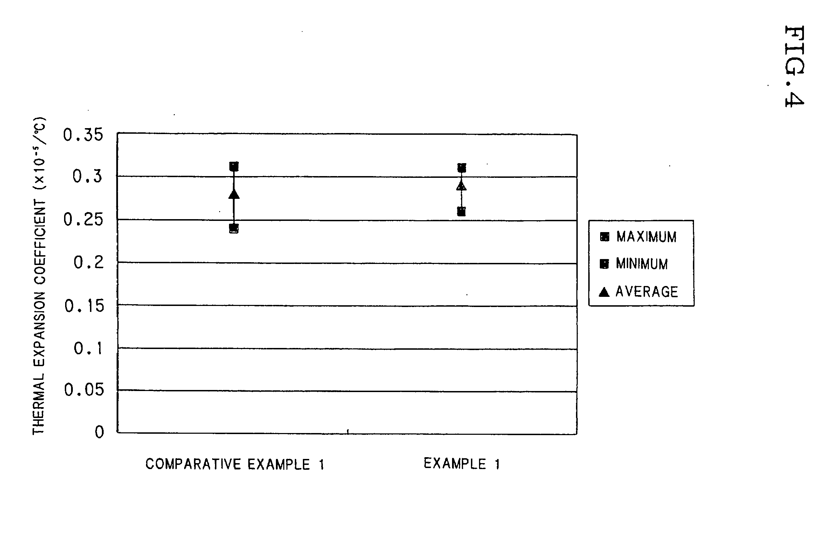

Further, the honeycomb structures of Example 1 and Comparative Example 1 were measured for thermal expansion coefficients according to the method described in JIS R 1618. The results are shown in Fig. 4.

As shown in Fig. 4, the thermal expansion coefficients of the honeycomb structures of Example 1 were in a range of 0.26 to 0.31 x 10⁻⁵/°C with the average being 0.29 x 10⁻⁵/°C. The thermal expansion coefficients of the honeycomb structures of Comparative Example 1 were in a range of 0.24 to 0.31 x 10⁻⁵/°C with the average being 0.29 x 10⁻⁵/°C. It can be said from these results that by using the compounded mixture for forming a green body of Example 1, there could be obtained a honeycomb structure having about the same thermal expansion coefficient as the compounded mixture for forming a green body of Comparative Example 1 and further having a high density unobtainable with conventional processes.

### [Evaluation of fired products by heat resistance temperature]

### (Example 2)

First, 100 parts by mass of a ceramic raw material powder and 7 parts by mass of a binder were mixed by a mixer for 3 minutes. Thereto was added 30 parts by mass of water, followed by mixing for 3 minutes, to produce a raw material for forming a honeycomb body structure. To this raw material for forming a honeycomb body structure was added 30 parts by mass of a crushed green body, followed by mixing for 4 minutes, to obtain a compounded mixture for forming a green body.

### (Example 3 - Comparative Example)

First, 100 parts by mass of a ceramic raw material powder and 7 parts by mass of a binder were mixed by a mixer for 3 minutes. Thereto was added 30 parts by mass of water, followed by mixing for 3 minutes, to produce a raw material for forming a honeycomb body structure. To this raw material for forming a honeycomb body structure was added 50 parts by mass of a crushed green body, followed by mixing for 4 minutes, to obtain a compounded mixture for forming a green body.

### (Comparative Example 3)

First, 100 parts by mass of a ceramic raw material powder and 7 parts by mass of a binder were mixed by a mixer for 3 minutes. Thereto was added 30 parts by mass of water, followed by mixing for 3 minutes, to obtain a compounded mixture for forming a green body.

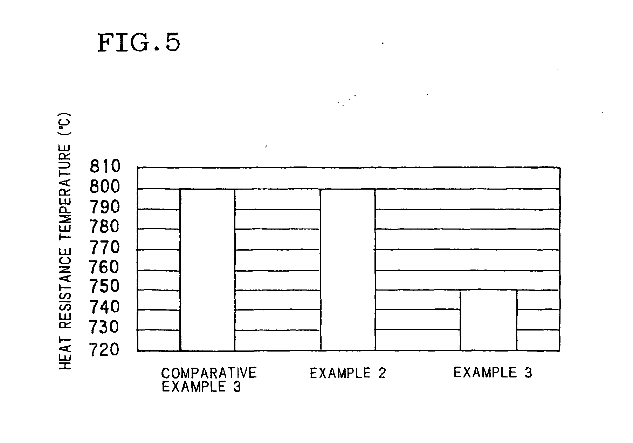

Each of the compounded mixture for forming a green body of Example 2 to 3 and Comparative Example 3 was passed through a continuous extruder to produce cylindrical formed honeycomb body having a circular bottom of 110 mm in diameter, a length of 80 mm, a square cell shape of 0.8 mm x 0.8 mm, a partition wall thickness of 50 µm , a cell density of 900/in.² and a total cell number of 13,000. Each formed honeycomb body was dried by dielectric drying and hot air drying and fired in a tunnel kiln to produce honeycomb structures. (These honeycomb structures are described as honeycomb structures of Example 2 to 3 and Comparative Example 3). Each honeycomb structure was subjected to a heat resistance test of heating at a given temperature for 30 minutes in an electric furnace, to evaluate the heat resistance temperature. The highest temperature giving no surface crack after heating under the above conditions was taken as heat resistance temperature. The results are shown in Fig. 5.

As is clear from Fig. 5, the honeycomb structure of Example 2 containing 30% by mass of a crushed green body relative to a ceramic raw material powder, gave a heat resistance temperature of 800°C which was about the same as the heat resistance temperature of the honeycomb structure of Comparative Example 3 containing no crushed green body and using a dried powder alone. Meanwhile, the honeycomb structure of Example 3 containing 50% by mass of a crushed green body relative to a ceramic raw material powder, gave a heat resistance temperature of 750°C and showed property deterioration. That is, the amount of the crushed green body added to the ceramic green body was considered to be preferably 30% by mass or less. Incidentally, when the compounded mixture for forming a green body of Example 3 was used, the formed material produced showed no defect such as voids, bending or cell deformation and, in this respect, exhibited similar merits to those of the compounded mixture for forming a green body of Example 2.

In the process for producing a formed honeycomb body according to the present invention, there is added in a predetermined amount, to an ordinary raw material for forming a honeycomb body structure in the form of a dried powder, a crushed green body obtained by crushing, into a predetermined maximum particle diameter or smaller, a green body having substantially the same composition as a compounded mixture for forming a green body to be obtained, and the resultant mixture is mixed by a mixer to obtain a compounded mixture for forming a green body. As a result, it is possible to reuse a rejected product of undried formed material as a raw material for forming a honeycomb body structure.

## Claims

1. A process for producing a formed honeycomb body, which comprises mixing, by a mixer, a raw material for forming a honeycomb body structure containing at least a first powdery material which is a ceramic raw material powder, a binder and water, to obtain a compounded mixture for forming a green body, and kneading and extruding the compounded mixture for forming a green body into a honeycomb shape by a continuous extruder, to obtain a formed honeycomb body,
wherein there is included, an amount in the raw material for forming the honeycomb body structure, of a second powdery material obtained by crushing, into a maximum particle diameter of 50 mm or smaller, an undried green body having substantially same composition as the compounded mixture for forming a green body, and the resulting mixture is mixed thoroughly by a mixer to obtain the compounded mixture for forming the green body, wherein said amount of said second powdery material is 30 parts by mass or less relative to 100 parts by mass of the first powdery material.

2. A process according to Claim 1, wherein said first powdery material contains a regenerated raw material powder obtained by drying a green body having substantially same composition as a compounded mixture for forming a green body and crushing the dried green body.

3. A process according to claim 1 or 2, wherein said first powdery material contains a virgin raw material powder.

4. A process for producing a formed honeycomb body according to any of Claims 1 to 3, wherein said raw material for forming a honeycomb body structure is mixed by a mixer, then said second powdery material from said crushed undried green body is added thereto, and the resultant mixture is mixed by a mixer to obtain the compounded mixture for forming the green body.

5. A process for producing a formed honeycomb body according to any of Claims 1 to 4, wherein a single-screw or multi-screw kneading extruder is used as the continuous extruder.

6. A process of producing a fired honeycomb body comprising producing a formed honeycomb body by the process according to any one of Claims 1 to 5, and drying and then firing said formed honeycomb body.

## Patentansprüche

1. Verfahren zur Herstellung eines Wabenformkörpers, umfassend das Vermischen, mittels eines Mischers, eines Rohmaterials zur Ausbildung einer Wabenkörperstruktur, das zumindest ein erstes pulverförmiges Material, das ein Keramikrohmaterialpulver ist, ein Bindemittel und Wasser enthält, um ein compoundiertes Gemisch zur Bildung eines Grünkörpers zu erhalten, sowie das Kneten und Extrudieren des compoundierten Gemischs zur Bildung eines Grünkörpers zu einer Wabenform mittels eines kontinuierlichen Extruders, um einen Wabenformkörper zu erhalten,
worin eine Menge eines zweiten pulverförmigen Materials, das durch Zerkleinern eines ungetrockneten Grünkörpers mit im Wesentlichen derselben Zusammensetzung wie das compoundierte Gemisch zur Bildung eines Grünkörpers auf einen maximalen Teilchendurchmesser von 50 mm oder weniger erhalten wurde, im Rohmaterial zur Ausbildung der Wabenkörperstruktur enthalten ist und das resultierende Gemisch mittels eines Mischers gründlich vermischt wird, um das compoundierte Gemisch zur Bildung des Grünkörpers zu erhalten, worin die Menge des zweiten pulverförmigen Materials, bezogen auf 100 Massenteile des ersten pulverförmigen Materials, 30 Massenteile oder weniger beträgt.

2. Verfahren nach Anspruch 1, worin das erste pulverförmige Material ein regeneriertes Rohmaterialpulver enthält, das durch Trocknen eines Grünkörpers mit im Wesentlichen derselben Zusammensetzung wie das compoundierte Gemisch zur Bildung eines Grünkörpers und Zerkleinern des getrockneten Grünkörpers erhalten wurde.

3. Verfahren nach Anspruch 1 oder 2, worin das erste pulverförmige Material ein reines Rohmaterialpulver enthält.

4. Verfahren zur Herstellung eines Wabenformkörpers nach einem der Ansprüche 1 bis 3, worin das Rohmaterial zur Ausbildung einer Wabenkörperstruktur mittels eines Mischers vermischt wird, anschließend das zweite pulverförmige Material aus dem zerkleinerten, ungetrockneten Grünkörper dazu zugesetzt wird und das resultierende Gemisch mittels eines Mischers vermischt wird, um das compoundierte Gemisch zur Bildung des Grünkörpers zu erhalten.

5. Verfahren zur Herstellung eines Wabenformkörpers nach einem der Ansprüche 1 bis 4, worin ein Einschnecken- oder Mehrschnecken-Knetextruder als kontinuierlicher Extruder eingesetzt wird.

6. Verfahren zur Herstellung eines gebrannten Wabenkörpers, umfassend die Herstellung eines Wabenformkörpers durch ein Verfahren nach einem der Ansprüche 1 bis 5 sowie das Trocknen und anschließende Brennen des Wabenformkörpers.

## Revendications

1. Procédé de fabrication d'un corps en nid d'abeilles formé, qui comprend le mélange, par un mélangeur, d'un matériau brut pour former une structure de corps en nid d'abeilles contenant au moins un premier matériau poudreux qui est une poudre de matériau céramique brut, un liant et de l'eau pour obtenir un mélange composite pour former un corps à l'état vert, et le malaxage et l'extrusion du mélange composite pour former un corps à l'état vert en une forme en nid d'abeilles par une extrudeuse continue, pour obtenir un corps en nid d'abeilles formé,
où est inclus une quantité dans le matériau brut pour former la structure de corps en nid d'abeilles, d'un deuxième matériau poudreux obtenu par concassage, en un diamètre de particules maximum de 50 mm ou plus petit, un corps à l'état vert non séché ayant sensiblement la même composition que le mélange composite pour former un corps à l'état vert, et le mélange obtenu est mélangé soigneusement par un mélangeur pour obtenir le mélange composite pour former le corps à l'état vert, où ladite quantité dudit deuxième matériau poudreux représente 30 parts en masse ou moins relativement à 100 parts en masse du premier matériau poudreux.

2. Procédé selon la revendication 1, où ledit premier matériau poudreux contient une poudre de matériau brute régénérée obtenue par le séchage d'un corps à l'état vert ayant sensiblement la même composition qu'un mélange composite pour former un corps à l'état vert et pour broyer le corps à l'état vert séché.

3. Procédé selon la revendication 1 ou 2, où ledit premier matériau poudreux contient une poudre de matériau brut vierge.

4. Procédé de fabrication d'un corps en nid d'abeilles formé selon l'une des revendications 1 à 3, où ledit matériau brut pour former une structure de corps en nid d'abeilles est mélangé par un mélangeur, ensuite ledit deuxième matériau poudreux dudit corps à l'état vert non séché broyé est ajouté à celui-ci, et le mélange obtenu est mélangé par un mélangeur pour obtenir le mélange composite pour former le corps à l'état vert.

5. Procédé de fabrication d'un corps en nid d'abeilles formé selon l'une des revendications 1 à 4, où une extrudeuse de pétrissage à vis unique ou à vis multiple est utilisée comme extrudeuse continue.

6. Procédé de fabrication d'un corps en nid d'abeilles cuit comprenant la production d'un corps en nid d'abeilles par le procédé selon l'une des revendications 1 à 5, suivi du séchage et de la cuisson dudit corps en nid d'abeilles formé
